# EUROPEAN PATENT APPLICATION

(11) **EP 4 414 796 A1**
(43) Date of publication of application: **14.08.2024**
(21) Application number: 24155855.0
(22) Date of filing: 05.02.2024
(51) Int. Cl.: G05B 15/02

(54) **A CONTROL SYSTEM FOR REPEATEDLY CONTROLLING A COMFORT SYSTEM IN A BUILDING**

(30) Priority: 09.02.2023 BE 202305094
(71) Applicant: Renson NV, 8790 Waregem (BE)
(72) Inventor: DE MARE, Bavo Paul Noël, 8540 Deerlijk (BE); DELRUE, Steven, 8530 Harelbeke (BE); VANDEKERCKHOVE, Steven, 8510 Marke (BE)
(74) Representative: Gevers Patents

(57) **Abstract**

A control system (10) for repeatedly controlling a comfort system in a building. The control system comprises: a central component (200) and a local component (300) communicating with each other; interfaces (210, 310, 320) for obtaining sensor data from sensors in the comfort system, operation data from appliances in the comfort system, external data, and desired data for ambient comfort. A first matrix generation module (220) in the central component stores the obtained data in a data matrix. The data matrix comprises all data to describe the behaviour, i.e. the evolution, of the ambient comfort in the residential building or space thereof. A second matrix generation module (230) in the central component generates a limited matrix from the data matrix such that a practically manageable matrix is available for the local component. Control signals are generated by a control module (320) in the local component, based on the limited matrix and the desired data.

## Description

### Technical field

The present invention relates to a control system for repeatedly controlling a comfort system in a building.

### State of the art

Various systems are known in the state of the art that are capable of influencing the atmospheric conditions in one or more spaces in a building. Examples are: a heating system, an air conditioning system, an HVAC (heating, ventilation, and air conditioning combined) system, a ventilation system, a sun blinds system, etc.

In the context of ventilation systems, various types are known that enable to ventilate one or more spaces in a building. A distinction is made between ventilation systems with natural supply and mechanical exhaust of air (also called C systems) and ventilation systems with mechanical supply and mechanical air exhaust (also called D systems). These systems can be implemented both centrally and decentrally, optionally demand-driven. The central version contains one fan that draws the air from several rooms. The decentralized version comprises multiple fans, each with a separate exhaust duct and which can be individually controlled to regulate the air exhaust for each space separately. In a ventilation system with natural supply and mechanical exhaust, the air is actively removed from the building, but the air supply is passive. For this purpose, windows can, for example, be equipped with air grilles or tilting windows that are in communication with the outside air. One or more ventilation motors draw air through air ducts and air grilles from spaces in the building that need to be ventilated, typically damp spaces, such as the kitchen, bathroom and the toilet in a house. In a ventilation system with mechanical supply and exhaust and with heat/energy recovery, air is actively exhausted to the outside and actively supplied from outside via one or more fans that are in communication with the spaces to be ventilated via supply and exhaust ducts. These are usually High Efficiency (HE) ventilation systems wherein a HR-unit uses the heat from the extracted air to partly heat the air supplied from outside before this supplied air is distributed over the spaces to be ventilated. A central or decentralized ventilation system therefore comprises, in addition to one or more ventilation motors, also one or more supply conduits and/or exhaust conduits, often equipped with a valve and/or flow controller per supply duct or exhaust duct. The ventilation capacity, expressed in cubic meters per hour (m³/h), litres per second (I/s) or litres per hour (I/h), can then be controlled per space to be ventilated by adjusting the motor speed, position of the valves and/or flow controllers. The fans, valves and flow controllers form the controllable apparatus of the ventilation system. Other controllable apparatus, such as air grilles, may be present.

Typically, a ventilation system is configured before commissioning by an installer using rules and set values (a so-called rule-based approach). The set values are, for example, threshold values for sensor parameters that cause a change in the fan rotational speed, the valve position or other adjustable operating parameter of one of the apparatus. After start-up, the ventilation system is automatically controlled, based on the set rules and measured sensor values. The ventilation system can also be controlled, based on manual input by the users of the building in which it is installed. Typically, manual user input takes precedence over automatic rule-based control, but after a certain period of time, the system returns to automatic control.

Various rule-based systems are known in the state of the art for controlling a ventilation system, such as, for example, US 2010/289643 A1, WO 2019/018627 A1 and US 2017/176030 A1. The main disadvantage of existing rule-based systems that control the ventilation in a building to increase the ambient comfort of the users of the building is that they are static. Control in such systems takes place, based on predefined rules or preconfigured user preferences. Deviation from the predefined rules and/or preference settings requires manual intervention by a user, which temporarily overrides the predefined rules and/or preference settings. This does not always lead to optimization of comfort for multiple users present in a building or space, and certainly not to optimization of the energy consumption of the ventilation system.

Moreover, in the context of residential buildings, there is very often a dynamic use of the different spaces. For example, spaces change function, e.g. desk to bedroom. Users change behaviour, e.g. office work or home work. Preprogrammed rule-based systems cannot adapt their behaviour in this dynamic context.

In addition, a thorough knowledge is also required to draw up the necessary rules and determine the various threshold values and/or set values with sufficient accuracy.

This problem has already been addressed in BE 1028467 A1 wherein a control device for a comfort system has been disclosed. The control device works on the basis of machine learning modules and serves to generate personal preference settings per user and to generate predictive models for certain data. Based on the personal preference settings and/or the predictive models, the control device then determines one or more settings of the comfort system to improve the personal ambient comfort of the person or persons present. The control device can also provide advice to the user(s) of the system regarding adjustments to the settings.

In the state of the art, other control systems are also known, namely white box, grey box or black box models. White box models use predictive models, based on physical equations, optionally in combination with predictive controllers. Gray box models use a theoretical model of the building in combination with data and/or data-derived parameters that can be adjusted automatically as more recent data becomes available. The disadvantage, however, remains that the theoretical models are difficult to establish and cannot handle every situation with equal accuracy. The necessary parameters must also be available, which is not always the case for residential applications. Black box models are based on data and use a certain architecture. Building this architecture also requires a high degree of knowledge and skill to build.

A problem with the known systems is the variability of the physical system they control, as already indicated above. The conditions in a building or in a room thereof change both in the short term (e.g. more or less people in the room, the installation of an additional comfort system) and in the long term (differences between winter and summer). In white box and grey box, this requires adjustments to the models contained in the core of the system. For black box, this may require retraining the system or even a new architecture.

It is further known to use non-parametric models for controlling a comfort system. This is disclosed, for example, in Vankatesh Chinde, Yashen Lin, and Matthew J. Ellis, "Data-Enabled Predictive Control for Building HVAC Systems," JOURNAL OF DYNAMIC SYSTEMS, MEASUREMENT AND CONTROL, Vol. 144, No. 8, August 1, 2022, pages 1-14, DOI: 10.1115/1.4054314. The non-parametric model is based on the use of DeepC.

### Description of the invention

It is an object of the present invention to reduce and/or remedy one or more of the disadvantages described above.

This object is achieved by means of a control system for repeatedly controlling a comfort system in a building, wherein the control system comprises: a central component and a local component that are in communication with each other; one or more interfaces, configured to: obtain sensor data from one or more sensors in said comfort system; to obtain operation data of one or more appliances in said comfort system; to obtain external data from one or more sources external to said comfort system; and to obtain desired data for the ambient comfort in the building; a first matrix generation module in the central component, configured to store said sensor data, said operation data and said external data in a data matrix, wherein each column of said data matrix comprises the available sensor data, operation data and external data during a certain time interval; a second matrix generation module in the central component, configured to generate a limited matrix by selecting a plurality of columns from said data matrix and sending the limited matrix to the local component; and a control module in the local component, configured to generate control signals for controlling said comfort system, based on the limited matrix and said desired data.

As used herein, the term "comfort system" refers to any system that has or may have an impact on the ambient comfort of a person present in the building. Examples are: a heating system, an air conditioning system, an HVAC (heating, ventilation, and air conditioning combined) system, a ventilation system, a sun blinds system, etc.

As used herein, the term "ambient comfort" refers to the numerical values that describe the subjective comfort of a person in the building and can be influenced by the comfort system. These may be factors that are directly perceptible to humans, such as temperature, humidity, light intensity, sound, odour, draught, etc. as well as factors that are not directly perceptible to humans, such as CO₂ content, fine particulate matter content, etc. but have an influence on the comfort of the person. Each numerical value that is part of the ambient comfort can be influenced by the comfort system and is measurable by one or more sensors that are part of the comfort system.

As used herein, the term "sensor data", referred to as *Y*, refers to numerical values for one or more physical quantities and/or factors that may be relevant for the behaviour of the comfort system. Examples of sensor data are: the temperature in the building or in a space thereof, the humidity in the building or in a space thereof, the CO₂ content in the building or in a space thereof, the fine particulate matter content in the building or in a space thereof, the sound intensity in the building or in a space thereof, the light intensity in the building or in a space thereof, the presence of one or more persons in the building or in a space thereof, etc. The sensor data have been obtained via one or more multiple sensors, present in the comfort system, which sensors allow the numerical values to be determined directly or indirectly (e.g. through the use of a mathematical formula or a correlation). Examples of sensors are: a thermometer, a hygrometer, a camera, an infrared detector, a heat detector, a CO₂ meter, etc.

As used herein, the term "operation data," referred to as *U*, refers to current and/or historical setting values of the controllable appliances in the comfort system. These values are typically stored in the individual devices. Examples of controllable appliances are flow controllers, valves, fan motor, a drive for the sun blinds, rotating slats, ventilation grilles, etc. Examples of the operation data are: flow values, the position of the valves or the rotating slats, the position of a sun blind, the power of the fan motor, the position of a ventilation grille, etc.

As used herein, the term "external data", referred to as *X*, refers to data that relates to or may influence the ambient comfort of a person present in the building but is not part of the comfort system. Examples thereof are: general weather conditions, such as outside temperature, air pressure, solar radiation, wind speed, precipitation, ambient air quality (e.g. fine particulate matter content), weather forecast, current or expected energy prices, input from sensors external to the residential unit, feedback from residents and/or other users, etc.

The sensor data, the operation data and/or the external data are typically obtained sequentially and/or represented as a series of values over time. The values may be obtained periodically, e.g. one value per minute, although a regular interval is not crucial.

As used herein, the term "data matrix" refers to the collection of historical sensor data, operational data and/or external data, stored as a structured data set, such as a tensor, in particular a matrix. Each column of the data matrix comprises the available sensor data, operation data and external data during a certain time interval, such as one or more hours or one day. The columns can cover separate, such as sequential, time intervals or can cover overlapping time intervals wherein the same point in time is included in several different columns.

The term "matrix" generally refers to a data structure with *M* rows and *N* columns, wherein *M* and *N* are natural numbers. The term "vector" generally refers to a data structure with 1 row and *N* columns (also referred to as a "row vector") or with *M* rows and 1 column (also referred to as a "column vector"), wherein *M* and *N* are natural numbers. The term "matrix" therefore also comprises the terms "vector", "row vector" and "column vector".

The control system according to the present invention comprises obtaining sensor data, operation data and external data. In other words, the control system according to the present invention collects all data that relates or could relate to the comfort system. The obtained data is kept in a data matrix wherein each column covers the data during a certain time interval. This data matrix therefore comprises all necessary data to describe the behaviour (i.e. the evolution) of the ambient comfort in a residential building or space thereof. The data matrix therefore also comprises the necessary data (i.e. columns) that describe or best approximate the current situation. Based on this data matrix, it is possible to generate control signals, namely by checking which column or combination of columns most resembles the current situation and extracting data from this column or combination thereof about the control signals used at the time.

However, the entire data matrix will, over time, contain a lot of data, making it practically unmanageable for a local computing device (i.e. for the local component); as well as optionally a lot of redundant data (e.g. time periods in which everything remains unchanged or repetitions over different days/weeks, etc.). The invention therefore further encompasses the concept of providing the entire data matrix only in a central component. This central component can be provided with the necessary computing power and comprises a second matrix generation module that is configured to generate a limited matrix by selecting columns from the data matrix, in particular those columns that best describe or approximate the current situation (i.e. the situation of the past days/weeks). Based on this limited matrix, control signals are then generated that should approximate the desired state of the comfort system, i.e. that should increase the ambient comfort. In this way, the present invention therefore constitutes a non-parametric strategy for controlling ambient comfort without the use of physical models drawn up by experts, as well as without the use of predictive models, based on artificial intelligence, which also require a lot of expertise and experience to choose a suitable architecture.

The control system also provides a local control, based on the limited matrix. The control continues to work, even in the absence of internet. There is also no latency that would exist if control were provided by a central control device. The control system according to the present invention is therefore optimized in terms of use by performing data-intensive operations (e.g. generating the limited matrix and storing the data matrix) in the central component, while the local component is responsible for the continuous control of the comfort system.

In an embodiment of the present invention, the first matrix generation module is configured to structure each column in the data matrix as [*UXY*]*^{T}* wherein *U* represents the operation data, *X* represents the external data and *Y* represents the sensor data, wherein preferably each column is structured as [*U_{P}X_{P}Y_{P}U_{F}X_{F}Y_{F}*]*^{T}* wherein p represents a first, in particular historical, time interval and represents F a second, in particular future, time interval.

The structure of each column in dividing each data type allows to easily add certain new elements or remove unnecessary elements. In particular, an extra sensor, actor, etc. can easily be added by inserting an additional row. In addition, an element can just as easily be omitted, e.g. if it is no longer available or suitable. It will be clear to the skilled person that the placement of *U, X* and *Y* in the column is not essential and they can be changed accordingly (e.g. to [*XUY*]*^{T}*) as long as each column is structured in the same way.

Dividing into two time intervals is further advantageous in the context of the invention for generating control signals, wherein, based on the data in a most recent time interval (i.e. the first time interval), data (i.e. the control signals) are determined, based on the desired state in a subsequent time interval (i.e. the second time interval). By already dividing the data matrix into two such blocks, this does not have to be done later when generating the control signals. Preferably, the first time interval is of the same length (e.g. 1 hour, 3 hours, 5 hours, 1 day, etc.) for each column and the same for the second time interval (e.g. 30 minutes, 1 hour, 2 hours, etc.).

As already described above, the data matrix will contain a lot of data over time. Therefor, it is maintained on the central component, i.e. the central server, central facility, the cloud, etc. Calculations on or with the data matrix are also performed there.

The present invention generally comprises the step of generating a limited matrix. This step can be performed in different ways. Since the limited matrix is intended to be used by the local control component (i.e. a computer or specific hardware present in the residential housing unit), the maximum dimensions *M* and *N* are known.

In a first embodiment of the present invention, the second matrix generation module is configured to generate the limited matrix by selecting the last *N* columns of the data matrix, wherein *N* is a natural number, equal to the number of columns in the limited matrix. This embodiment is easy to implement and requires little computing power. This embodiment can cause problems if there are drastic changes in the circumstances (e.g. severe winter weather or heat wave) since the behaviour of the system in those circumstances is normally not included in the most recent *N* columns.

In a second embodiment of the present invention, the second matrix generation module is configured to generate the limited matrix by: extracting from the data matrix the sensor data, the operation data and the external data of a past time interval into a first extracted data matrix; extracting from the data matrix the sensor data, the operation data and the external data of a time interval following the expired time interval into a second extracted data matrix, in particular a vector, more in particular a column vector; and determining a combination of columns, in particular a linear combination, in the first extracted data matrix that corresponds to the second extracted data matrix.

It should be understood that the second extracted data matrix does not necessarily have to be a column vector, but can also be a plurality of column vectors (i.e. a matrix). In this way, actually a linear combination is sought for each of the column vectors. Afterwards, a most suitable linear combination can be sought that describes each of the column vectors as well as possible. The advantage of using simultaneously multiple column vectors is because the optionally limited time span of only one column vector can give rise to a limited matrix that is only sufficiently accurate for a short period.

In this embodiment, the collected data matrix is split into two extracted data matrices wherein the second extracted data matrix comprises the most recent data (e.g., the past 2 hours) and wherein the first extracted data matrix comprises data prior to the most recent data. Preferably, all available data is included in the first extracted data matrix, but it is also possible to decide to include only data from a more limited period (e.g. 1 week, 1 month, 1 quarter, etc.). Subsequently, a combination of columns is sought in the first extracted data matrix that corresponds to the second extracted data matrix. Preferably, this is a linear combination as it requires less computing power than a non-linear combination. In this way, the relevant columns are actually identified in the historical data that together correspond to the most recent data. These columns describe therefore together the recent behaviour of the comfort system and form a good basis for the limited matrix.

Preferably, the second matrix generation module is configured to determine the combination of columns by: solving the matrix equation [*U*₀*X*₀*Y*₀]*^{T}* _{*} *g* = [*UXY*]*^{T}* for *g*, wherein *U* represents the operation data, X represents the external data, and *Y* represents the sensor data, wherein [*U*₀*X*₀Y₀]*^{T}* is the first extracted data matrix and wherein [*UXY*]*^{T}* is the second extracted data matrix. Solving this matrix equation is an efficient way to identify the linear combination of columns in the first extracted data matrix that corresponds to the second extracted data matrix. If no exact solution can be found, the linear combination corresponding to the second extracted data matrix can be the one with a minimum margin of error, e.g. based on the squared error or some other error metric.

Optionally, the second matrix generation module is configured to generate the limited matrix by selecting *N* columns from said combination of columns, wherein *N* is a natural number, equal to the number of columns in the limited matrix. This is advantageous if the number of columns in said combination of columns is greater than the maximum size of the limited matrix because, in this way, the limited matrix is prevented from exceeding the maximum dimension.

In an embodiment of the present invention, the second matrix generation module is configured to generate a plurality of mutually distinct limited matrices by selecting a plurality of columns for each limited matrix from said data matrix and sending each limited matrix to the local component, and wherein the local component comprises a control module, configured to select one limited matrix from among the mutually different limited matrices, wherein the control module is configured to generate the control signals, based on the selected limited matrix.

There may be several limited matrices available for various reasons. First, there can be several equivalent solutions *g* of the matrix equation [*U*₀*X*₀*Y*₀]*^{T}* _{*} *g* = [*UXY*]*^{T}*. There can also be different limited matrices for different external weather conditions (e.g. per season) or for different days of the week (e.g. workday or weekend). It is also possible that there is already an existing limited matrix and that a new one has been drawn up in the meantime (e.g. via a periodic calculation, such as 1 time a week). The control system then comprises a selection step for selecting one of the available limited matrices. This selection step can be performed in different ways.

In a first embodiment of the present invention, the control module is configured to select said one limited matrix by: successively using each limited matrix from the plurality of mutually different limited matrices to generate control signals for the comfort system during a certain period of time; and comparing an obtained state of the comfort system with said desired data for each limited matrix.

In this embodiment, all available limited matrices from the plurality of mutually different limited matrices are sequentially selected to control the comfort system during a certain period of time (e.g. a number of hours, 1 day, 3 days, etc.). By comparing the obtained state and the desired state, it is possible to identify a best-working limited matrix. The main drawback to this embodiment is the time, required to test the various limited matrices, which can quickly add up to several weeks. As a result, residents of, or those present in, the building do not necessarily have the desired ambient comfort.

In a second embodiment of the present invention, the control module is configured to select said one limited matrix by: obtaining control signals, based on a current limited matrix; generating a first matrix, in particular a vector, more in particular a column vector, containing the sensor data, the operation data and the external data of a recent time interval, predictive external data for a future time interval, and said control signals, based on a current limited matrix; determining a combination of columns, in particular a linear combination, in each limited matrix, corresponding to the first matrix, as a plurality of matrices, in particular a plurality of vectors, more in particular a plurality of column vectors ; *g*calculating sensor data in the future time interval, based on the matrix *g* and the sensor data for each limited matrix; and comparing the obtained sensor data for each extracted data matrix, in particular by comparing these with newly obtained sensor data, e.g. the sensor data obtained after executing the control signals, based on the current limited matrix.

In summary, the currently used limited matrix is used to generate future control signals. These future control signals are then placed in a column vector (commonly the first matrix) together with the most recent data and predictions. Then, for each limited matrix, a combination of columns *g* is sought that matches the first matrix. Then, this selection of columns can be used to generate future sensor data for each limited matrix. These sensor data can mutually be compared with the desired values or, preferably, with the sensor values measured later in the building, to identify which limited matrix best approximates these values.

The advantage of this is that this calculation can be done by a control module on the central component without affecting the current control of the comfort system.

Preferably, determining a combination of columns comprises: solving the matrix equation [*U_{P}X_{P}Y_{P}U_{F}X_{F}*]*^{T}* _{*} *g* = [*UᵢXᵢ,YᵢU_{D}X_{D}*]*^{T}* for *g* for each limited matrix, wherein *U* represents the operation data, *X* represents the external data, *Y* represents the sensor data, *p* represents a historical time interval, *F* represents a future time interval, *i* represents a most recent time interval, and *D* represents a future time interval, wherein [*U_{P}X_{P}Y_{P}U_{F}X_{F}*]*^{T}* is the respective limited matrix and wherein [*U_{D}*]*^{T}* comprises said control signals, based on a current limited matrix, and wherein calculating sensor data in the future time interval comprises: calculating [*Y_{F}*]*^{T}* _{*} *g* = [*Y_{D}*]*^{T}*. Solving these matrix equations is an efficient way to identify the linear combination of columns in any limited matrix that corresponds to the first matrix. If no exact solution can be found, the linear combination, corresponding to the first matrix can be the one with a minimal margin of error, e.g. based on the squared error or some other error metric.

In an embodiment of the present invention, the control module is configured to generate the control signals by: generating a first matrix, in particular a vector, more in particular a column vector, containing the sensor data, the operation data and the external data of a recent time interval, predictive external data for a future time interval, and said desired data; determining a combination of columns, in particular a linear combination, in the limited matrix (wherein information about the operation data in the future part of the time series may be omitted) that corresponds to the first matrix as a matrix, in particular a vector, more specifically a column vector, *g* ; calculating operation data in the future time interval, based on the matrix and the operation data in the limited data matrix. Preferably, determining a combination of columns comprises: solving the matrix equation [*U_{P}X_{P}Y_{P}X_{F}Y_{F}*]*^{T}* _{*} *g* = [*UᵢXᵢYᵢX_{D}Y_{D}*]*^{T}*for *g*, wherein *U* represents the operation data, *X* represents the operation data, *Y* represents the external data, *p* represents the sensor data, *F* represents a historical time interval, *i* represents a future time interval, *D* represents a most recent time interval, and represents a future time interval, wherein [*U_{P}X_{P}Y_{P}X_{F}Y_{F}*]*^{T}* is the limited matrix and wherein [*Y_{D}*]*^{T}* comprises said desired data, and wherein, preferably, calculating operation data in the future time interval comprises: calculating [*U_{F}*]*^{T}* * *g* = [*U_{D}*]*^{T}*.

In summary, the most recent data, desired data, and predictions are placed in a column vector (commonly the first matrix). Then, for the limited matrix, a combination of columns *g* is found that corresponds to the first matrix. Then, this selection of columns can be used to generate future operation data for the limited matrix. This operation data is then used to generate the necessary control signals.

In an embodiment of the present invention, the sensor data comprise one or more of: temperature, carbon dioxide content, humidity, fine particulate matter content, sound intensity, light intensity, and presence of a person in the building or in one or more rooms thereof.

In an embodiment of the present invention, the operation data comprises one or more of: setting values of a ventilation system, setting values of a sun protection system, setting values of a heating system, and setting values of a cooling system.

### Brief description of the drawings

The invention will hereinafter be explained in further detail on the basis of the following description and the accompanying drawings.
Figure 1 shows a block diagram of an embodiment of a control device according to the present invention.
Figure 2 shows a flowchart of a method according to the present invention.

### Embodiments of the invention

The present invention will hereinafter be described with reference to specific embodiments and with reference to certain drawings, but the invention is not limited thereto and is defined only by the claims. The drawings shown here are only schematic representations and are not restrictive. In the drawings, the dimensions of certain parts may be shown enlarged, which means that the parts in question are not shown to scale and this is for illustrative purposes only. The dimensions and relative dimensions do not necessarily correspond to actual practical embodiments of the invention.

In addition, terms such as "first", "second", "third", and the like are used in the description and in the claims to distinguish between similar elements and not necessarily to indicate a sequential or chronological order. The terms herein are interchangeable in appropriate circumstances, and embodiments of the invention may operate in different sequences than those described or illustrated herein.

In addition, terms such as "top," "bottom," "above," "below," and the like are used in the description and in the claims for descriptive purposes. The terms so used are interchangeable in appropriate circumstances, and the embodiments of the invention may operate in other orientations than those described or illustrated herein.

The term "comprising" and derivative terms, as used in the claims, shall not be construed as being limited to the means set forth in each case thereafter; the term does not exclude other elements or steps. The term shall be interpreted as a specification of the stated properties, integers, steps, or components referred to, without excluding the presence or addition of one or more additional properties, integers, steps, or components, or groups thereof. The scope of an expression such as "a device comprising means A and B" is therefore not limited solely to devices consisting purely of components A and B. What is meant, on the other hand, is that, as far as the present invention is concerned, the only relevant components are A and B.

The term "approximately" comprises variations of +/- 10% or less, preferably +/-5% or less, more preferably +/-1% or less, and more preferably +/-0.1% or less, of the specified condition, to the extent that the variations are applicable to function in the present invention. It should be understood that the term "approximately A" is intended to also include "A".

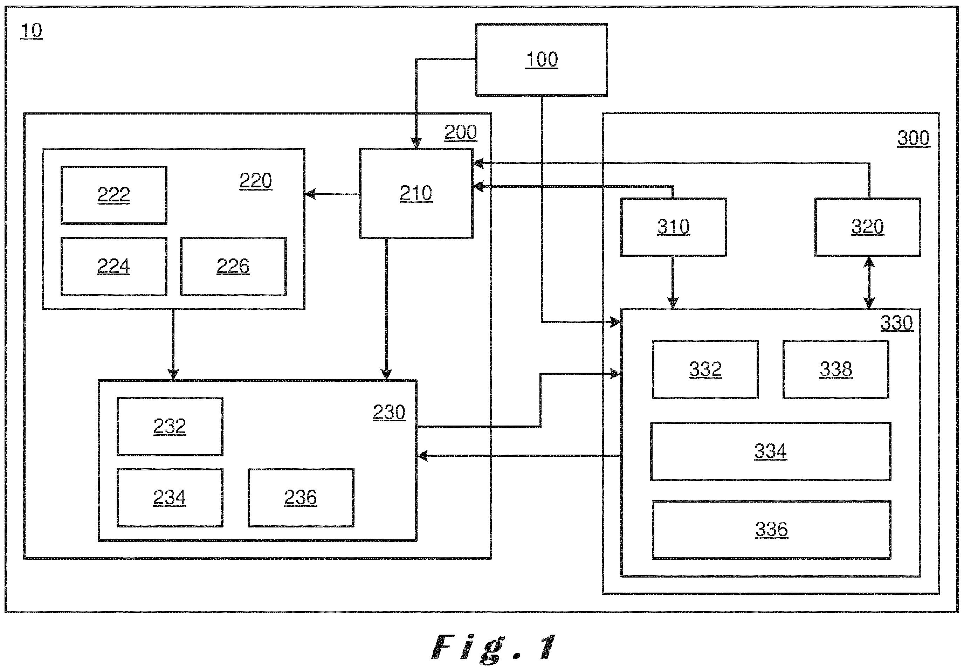

Figure 1 shows a block diagram of an embodiment of a control device 10 according to the present invention for repeatedly controlling a comfort system in a building. The control device 10 comprises a public component 100, a central component 200 and a local component 300.

The local component 300 is typically physically present in the building and comprises a sensor module 310, an operating module 320 and a control module 330. The sensor module 310 serves to interact with the sensors, present in the comfort system and serves to obtain the sensor data. The operating module 320 serves to interact with the various controllable appliances, present in the comfort system. On the one hand, the operating module 320 sends the necessary control signals to the various appliances and also serves to obtain the operation data. The control module 330 serves to control the local component 300 and is described in more detail below.

The local component 300 is generally a computer system comprising a bus, a processor, a central memory, one or more input/output (I/O) interfaces, and a communications interface. The bus comprises one or more conductors and allows communication between the different components of the computer system. Processor comprises any type of conventional processor or microprocessor that reads and executes computer program instructions. Local memory is intended to comprise any form of computer-readable information storage medium, such as a working memory (e.g. Random Access Memory - RAM), a static memory (e.g. a Read-Only Memory - ROM), a hard drive, or removable storage media (e.g. a DVD, CD, USB storage, SSD, etc.), etc. The local memory is typically used to store information and instructions that need to be processed by the processor. The I/O interface may comprise one or more conventional systems that allow communication between the local component 300 and an administrator. Examples are a keyboard, a mouse, speech recognition, biometrics, a (touch) screen, a printer, a speaker, etc. The communication interface is typically a transceiver system that allows communication with external systems. Examples are a Wide Area Network (WAN), such as the Internet, a Low Power Wide Area Network (LPWAN) such as Sigfox, LoRa, NarrowBand loT, etc., a Personal Area Network (PAN) such as Bluetooth, or a Local Area Network (LAN). If necessary, the communication interface can be used as part of the I/O interface, e.g. by communicating with an application on a device (e.g. a laptop, computer, smartphone, etc.) of the administrator.

The public component 100 is typically a publicly available source of external data, for example weather predictions.

The central component 200 is generally a computer system, comprising a bus, a processor, a central memory, one or more input/output (I/O) interfaces, and a communications interface. The bus comprises one or more conductors and allows communication between the different components of the computer system. Processor comprises any type of conventional processor or microprocessor that reads and executes computer program instructions. Local memory is intended to comprise any form of computer-readable information storage medium, such as a working memory (e.g. Random Access Memory - RAM), a static memory (e.g. a Read-Only Memory - ROM), a hard drive, or removable storage media (e.g. a DVD, CD, USB storage, SSD, etc.), etc. The local memory is typically used to store information and instructions that need to be processed by the processor. The I/O interface may include one or more conventional systems that allow communication between the central component 200 and an administrator. Examples are a keyboard, a mouse, speech recognition, biometrics, a (touch) screen, a printer, a speaker, etc. The communication interface is typically a transceiver system that allows communication with external systems. Examples are a Wide Area Network (WAN), such as the Internet, a Low Power Wide Area Network (LPWAN) such as Sigfox, LoRa, NarrowBand loT, etc., a Personal Area Network (PAN) such as Bluetooth, or a Local Area Network (LAN). If necessary, the communication interface can be used as part of the I/O interface, e.g. by communicating with an application on a device (e.g. a laptop, computer, smartphone, etc.) of the administrator.

The central component 200 comprises a data module 210 for obtaining the necessary data, a first matrix generation module 220 for generating the data matrix and a second matrix generation module 230 for generating and/or comparing the limited matrix. The functionality of these modules 220, 230 is further described in more detail.

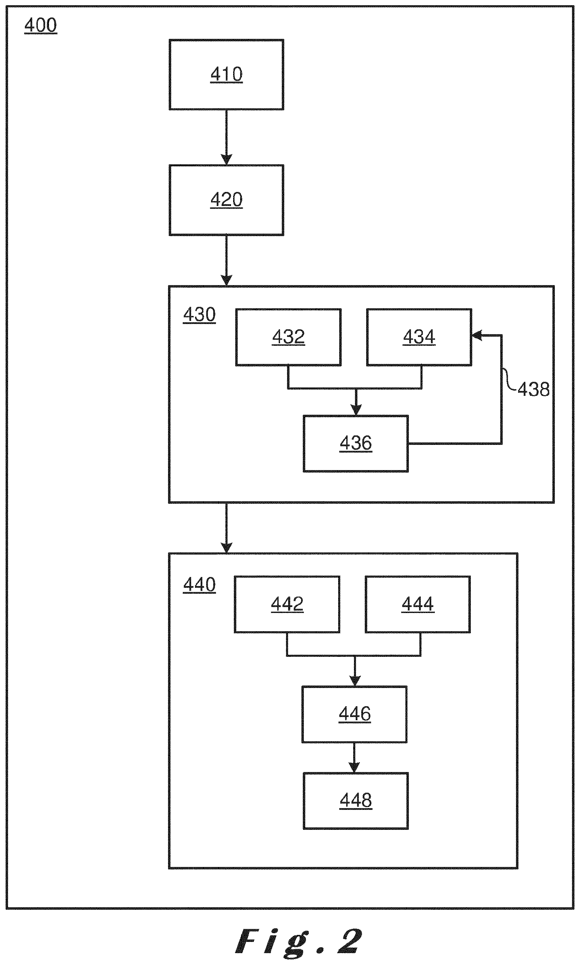

Figure 2 illustrates a flowchart of a method 400 for repeatedly controlling a comfort system in a building.

The method 400 comprises obtaining 410 data, namely sensor data, operation data, external data and desired data for the ambient comfort in the building. The sensor data is obtained via the sensor module 310 and the operation data via the operating module 320. The external data is typically available via the public component 100. The desired data is obtained via interaction of the local component 300 with a user (such as a resident) of the building. All data is collected in the data module 210 and is made available via this module 210 to the first matrix generation module 220. The desired data can also be obtained via interaction with the central component 200.

In step 420, the obtained data is stored in a data matrix by the first matrix generation module 220. The first matrix generation module 220 comprises a definition unit 222 that comprises definitions, useful for the matrix construction. Examples are the sensor data and operation data used, time series definitions (e.g. frequency, time series length, separation into history and future), matrix construction method (e.g. Hankel matrix), compilation frequency, minimum matrix size, definitions for additional checks to avoid similar columns (e.g. using remote metrics).

Based on the definitions in the definition unit 222, the first matrix generation module 220, in particular the calculation module 224 therein, generates a data matrix wherein each column of said data matrix comprises the available sensor data, operation data and external data during a certain time interval. This generation can also comprise adding newly obtained data to an existing data matrix. It is preferable to check whether the data to be added is comparable to existing data in the data matrix, in which case the data is not necessarily added. The final data matrix is stored in the data store 226 and can span months or even years of data. Preferably, each column in the data matrix is structured as [*U_{P}X_{P}Y_{P}U_{F}X_{F}Y_{F}*]*^{T}* wherein *U* represents the operation data, *X* represents the external data, *Y* represents the sensor data, *p* represents a first, in particular historical, time interval and *F* represents a second, in particular future, time interval.

If no data is available during a certain time interval and/or for a specific data type (e.g. a specific sensor or actor), default values (e.g. zero values) can be placed.

In step 430, the second matrix generation module 230, in particular the calculation module 234 therein, generates a limited matrix by selecting a plurality of columns from said data matrix. The second matrix generation module 230 also comprises a definition unit 232 which mainly comprises information about the maximum dimensions(in particular the number of columns *N*) of the limited matrix to be obtained.

In an embodiment, the limited matrix may consist solely of the last *N* columns of the data matrix. However, in the embodiment shown, step 430 comprises several sub-steps for selecting the columns from the data matrix that best describe the current conditions.

In step 432, a column vector is extracted from the data matrix representing the most recent data. This could, for example, be the very last column of the data matrix. This column is generally structured as [*U_{P}X_{P}Y_{P}U_{F}X_{F}Y_{F}*]*^{T}*. However, since the division between past and future is not relevant for this step, we will write this abbreviated as [*UXY*]*^{T}*. The remainder of the data matrix (or part thereof) is extracted in step 434 as a second data matrix [*U*₀*X*₀*Y*₀]*^{T}*.

In step 436, the matrix equation [*U*₀*X*₀*Y*₀]*^{T}* _{*} *g* = [*UXY*]*^{T}* is solved for *g.* The column vector *g* contains the information about which columns from the second data matrix describe the most recent behaviour of the comfort system.

In an ideal scenario, the column vector *g* exactly identifies *N* columns in the data matrix that are important and these form the limited matrix. However, this is quite unrealistic and even to the extent that finding an exact solution is not necessarily possible. If no exact solution can be found, the linear combination corresponding to the second extracted data matrix can be the one with a minimum margin of error, e.g. based on the squared error or some other error metric. In addition, it is very likely that more than *N* columns will be identified. Therefor, there is a step 438 wherein the method returns to step 434 and constructs the second data matrix [*U*₀*X*₀*Y*₀]*^{T}* with the identified more than *N* columns and omits one or more thereof. In this way, step 436 can be performed again to see each time what the influence of that specific column is on the column vector *g*found.

After a limited matrix has been generated, it is stored in a data storage 236 and/or sent to the local component 300 and stored in a data storage 332. In step 440, control signals are generated for controlling said comfort system on the basis of the limited matrix in the data storage. 332 and desired comfort data (e.g. obtained through communication with the user of the building).

To this end, step 440 firstly comprises sub-step 442 for generating a first matrix, in particular a vector, more in particular a column vector, containing the sensor data, the operation data and the external data of a most recent time interval, predictive external data for a future time interval, and said desired data. This is structured as a column vector [*UᵢXᵢYᵢX_{D}Y_{D}*]*^{T}*, wherein *U* represents the operation data, *X* represents the external data, *Y* represents the sensor data, *i* represents a most recent time interval, *D* represents a future time interval, wherein [*Y_{D}*]*^{T}* comprises said desired data.

In step 444, the limited matrix stored in the data storage 332 is retrieved (optionally via a selection module 334 described below). In general, each column of the limited matrix is structured as [*U_{P}X_{P}Y_{P}U_{F}X_{F}Y_{F}*]*^{T}*. In step 444, the data *U_{F}* is removed from the limited matrix. Or stated differently, a limited limited matrix is constructed as [*U_{P}X_{P}Y_{P}X_{F}Y_{F}*]*^{T}*. In step 446, the matrix equation [*U_{P}X_{P}Y_{P}X_{F}Y_{F}*]*^{T}* _{*} *g =* [*UᵢXᵢYᵢX_{D}Y_{D}*]*^{T}* is solved for *g*. Once this column vector *g* is known, the method continues to step 448 wherein the operation data in the future time interval is calculated via [*U_{F}*]*^{T}* _{*} *g =* [*U_{D}*]*^{T}*. This operation data [*U_{D}*]*^{T}* can then be used by the operating module 320 to generate control signals.

There may also be several different limited matrices available in the data store 332. This may be because, for example, multiple solutions have been found by the second matrix generation module 230 or because an update has been requested by the control module 330 to the second matrix generation module 230 or because there is an periodic update or for yet another reason. The control module 330 is therefore provided with a selection module 334 for selecting one of the available limited matrices from the data storage 332. In an embodiment, one of the available limited matrices can be selected at random. If necessary, the various available limited matrices can be used sequentially, after which there is an evaluation of the ambient comfort obtained. However, in the embodiment shown, the control module 330 comprises a scoring module 336.

The scoring module 336 serves to generate a quality score for each of the available limited matrices. To this end, the scoring module 336 calculates the operation data (or control signals), based on the current limited matrix (e.g., as in step 440). In this way, a first matrix is obtained, in particular a vector, more in particular a column vector, containing the sensor data, the operation data and the external data of a (most) recent time interval, predictive external data for a future time interval, and control signals, based on a current limited matrix. This is structured as a column vector [*UᵢXᵢYᵢU_{D}X_{D}*]*^{T}*, where *U* represents the operation data, *X* represents the external data, *Y* represents the sensor data, *i* represents a most recent time interval, *D* represents a future time interval, and wherein [*U_{D}*]*^{T}* comprises said control signals, based on a current limited matrix.

In general, each column of each limited matrix is structured as [*U_{P}X_{P}Y_{P}U_{F}X_{F}Y_{F}*]*^{T}*. Then, the data *Y_{F}* is removed from the limited matrix. Or stated differently, a limited limited matrix is constructed as [*U_{P}X_{P}Y_{P}U_{F}X_{F}*]*^{T}*. Then, the matrix equation [*U_{P}X_{P}Y_{P}U_{F}X_{F}*]*^{T}* _{*} *g =* [*UᵢXᵢ,YᵢU_{D}X_{D}*]*^{T}* is solved for *g* for each limited matrix. Once this column vector *g* is known, the sensor data in the future time interval can be calculated via [*Y_{F}*]*^{T}* _{*} *g =* [*Y_{D}*]*^{T}*. This sensor data [*Y_{D}*]*^{T}* can then be compared with each other and/or with the desired data to obtain a quality score. Preferably, this sensor data [*Y_{D}*]*^{T}* is compared with the sensor data obtained later (i.e. the sensor data obtained by outputting the operation data determined, based on the current limited matrix) via the sensor module 310 to obtain a quality score. This quality score can be passed to the selection module 334 to select the most suitable limited matrix. The selection module 334 can optionally also remove limited matrices, e.g. if they have a very low score or if two (or more) limited matrices have almost the same score.

In the embodiment shown, the control module 330 in the local component 300 also comprises a data storage 338 for storing one or more basic models, e.g. rule-based models. These can be used when the control device 10 is first put into use before a limited matrix is available. These can also be used if the scoring module 336 gives too low a score to each of the available limited matrices.

Generating a limited matrix (i.e., step 430) may, in certain embodiments, be repeated periodically (e.g., 1 time a week or 1 time a month). In this way, various limited matrices are obtained. If desired, these can be merged into one larger limited matrix with 2 _{*} *N,* 3 _{*} *N*, etc. columns, depending on how many limited matrices are merged. This can lead to one limited matrix that is able to describe the behaviour of an entire year. Optionally, loop 438 can be run on the larger limited matrix to limit the number of columns to a dimension, workable for the local component.

As already described above, the generation of a limited matrix (i.e. step 430) can also be performed for multiple column vectors in the right-hand side of matrix equation [*U*₀*X*₀*Y*₀]*^{T}* _{*} *g* = [*UXY*]*^{T}*. Then, solving this equation for g amounts to finding a linear combination for each of the column vectors in the right-hand side.

The methods described above can be implemented as computer program instructions. These or parts thereof may be stored locally in local component 300 as well as in the central component 200. Alternatively, the computer program instructions or parts thereof may be stored externally and may be accessible to the central component 200 and/or the local component 300 via a respective communication interface.

Although certain aspects of the present invention have been described with respect to specific embodiments, it is apparent that these aspects may be implemented in other forms within the scope of the claims.

## Claims

1. Control system (10) for repeatedly controlling a comfort system in a building with one or more rooms, wherein the control system comprises:
- a central component (200) and a local component (300) that are in communication with each other;
- one or more interfaces (210, 310, 320), configured to:
- obtain sensor data from one or more sensors in said comfort system;
- obtain operation data from one or more appliances in said comfort system;
- obtain operation data of one or more appliances in said comfort system;
- obtain external data from one or more sources external to said comfort system; and
- obtain desired data for the ambient comfort in the building;
- a first matrix generation module (220) in the central component, configured to store said sensor data, said operation data and said external data in a data matrix, wherein each column of said data matrix comprises the available sensor data, operation data and external data during a certain time interval;
- a second matrix generation module (230) in the central component, configured to generate a limited matrix by selecting a plurality of columns from said data matrix and sending the limited matrix to the local component; and
- a control module (320) in the local component, configured to generate control signals for controlling said comfort system, based on the limited matrix and said desired data.

2. Control system according to claim 1, wherein the first matrix generation module (220) is configured to structure each column in the data matrix as [*UXY*]*^{T}* wherein *U* represents the operation data, *X* represents the external data and *Y* represents the sensor data, wherein preferably each column is structured as [*U_{P}X_{P}Y_{P}U_{F}X_{F}Y_{F}*]*^{T}* wherein *p* represents a first, in particular historical, time interval and F represents a second, in particular future, time interval.

3. Control system according to claim 1 or 2, wherein the second matrix generation module (230) is configured to generate the limited matrix by selecting the last *N* columns of the data matrix, wherein *N* is a natural number, equal to the number of columns in the limited matrix.

4. Control system according to claim 1 or 2, wherein the second matrix generation module (230) is configured to generate the limited matrix by:
- extracting (434), from the data matrix, the sensor data, the operation data and the external data of a past time interval into a first extracted data matrix;
- extracting (432), from the data matrix, the sensor data, the operation data and the external data of a time interval following the expired time interval into a second extracted data matrix, in particular a vector, more in particular a column vector; and
- determining (436) a combination of columns, in particular a linear combination, in the first extracted data matrix that corresponds to the second extracted data matrix.

5. Control system according to claim 4, wherein the second matrix generation module (230) is configured to determine the combination of columns by: solving the matrix equation [*U*₀*X*₀*Y*₀]*^{T}* _{*} *g* = [*UXY*]*^{T}* to *g*, wherein *U* represents the operation data, *X* represents the external data, and *Y* represents the sensor data, wherein [*U*₀*X*₀*Y*₀]*^{T}* is the first extracted data matrix and wherein [*UXY*]*^{T}* is the second extracted data matrix.

6. Control system according to claim 4 or 5, wherein the second matrix generation module (230) is configured to generate the limited matrix by selecting (438) columns from said combination of *N* columns, wherein *N* is a natural number, equal to the number of columns in the limited matrix.

7. Control system according to any one of the preceding claims, wherein the second matrix generation module (230) is configured to generate a plurality of mutually distinct limited matrices by selecting a plurality of columns for each limited matrix from said data matrix and sending each limited matrix to the local component, and wherein the local component comprises a control module (330), configured to select one limited matrix from among the mutually different limited matrices, wherein the control module (320) is configured to generate the control signals, based on the selected limited matrix.

8. Control system according to claim 7, wherein the control module (330) is configured to select said one limited matrix by:
- successively using each limited matrix to generate control signals for the comfort system during a certain period of time; and
- comparing an obtained state of the comfort system with the desired data for each limited matrix.

9. Control system according to claim 7, wherein the control module (330) is configured to select said one limited matrix by:
- obtaining control signals, based on a current limited matrix;
- generating a first matrix, in particular a vector, more in particular a column vector, containing the sensor data, the operation data and the external data of a recent time interval, predictive external data for a future time interval, and said control signals, based on a current limited matrix;
- determining a combination of columns, in particular a linear combination, in each limited matrix corresponding to the first matrix as a multitude of matrices, in particular a multitude of vectors, more in particular a multitude of column vectors *g*;
- calculating sensor data in the future time interval, based on the matrix *g* and the sensor data for each limited matrix, and
- comparing the obtained sensor data for each extracted data matrix, in particular by comparing these with newly obtained sensor data.

10. Control system according to claim 9, wherein the control module (330) is configured to determine the combination of columns by: solving the matrix equation [*U_{P}X_{P}Y_{P}U_{F}X_{F}*]*^{T}* _{*} *g =* [*UᵢXᵢ,YᵢU_{D}X_{D}*]*^{T}* for *g* for each limited matrix, wherein *U* represents the operation data, *X* represents the external data, *Y* represents the sensor data, *p* represents a historical time interval, *F* represents a future time interval, *i* represents a most recent time interval, and *D* represents a future time interval, wherein [*U_{P}X_{P}Y_{P}U_{F}X_{F}*]*^{T}* is the limited matrix and wherein [*U_{D}*]*^{T}* comprises said control signals, based on a current limited matrix, and
wherein the control module (330) is configured to calculate the sensor data in the future time interval by: calculating [*Y_{F}*]*^{T}* _{*} *g* = [*Y_{D}*]*^{T}*.

11. Control system according to any one of the preceding claim, wherein the control module (320) is configured to generate the control signals by:
- generating (442) a first matrix, in particular a vector, more in particular a column vector, containing the sensor data, the operation data and the external data of a recent time interval, predictive external data for a future time interval, and said desired data;
- determining (446) a combination of columns, in particular a linear combination, in the limited matrix corresponding to the first matrix as a matrix, in particular a vector, more in particular a column vector *g*; and
- calculating (448) operation data in the future time interval, based on the matrix *g* and the operation data in the limited data matrix.

12. Control system according to claim 11, wherein the control module (320) is configured to determine the combination of columns by: solving the matrix equation [*U_{P}X_{P}Y_{P}X_{F}Y_{F}*]*^{T}* _{*} *g =* [*UᵢXᵢYᵢX_{D}Y_{D}*]*^{T}* for *g*, wherein *U* represents the operation data, *X* represents the external data, *Y* represents the sensor data, *p* represents a historical time interval, *F* represents a future time interval, *i* represents a most recent time interval, and *D* represents a future time interval, wherein [*U_{P}X_{P}Y_{P}X_{F}Y_{F}*]*^{T}* is the limited matrix and wherein [*Y_{D}*]*^{T}* comprises said control signals.

13. Control system according to claim 12, wherein the control module (320) is configured to calculate the operation data in the future time interval by: calculating [*U_{P}*]*^{T}* _{*} *g* = [*U_{D}*]*^{T}*.

14. Control system according to any one of the preceding claims, wherein the sensor data comprises one or more of: temperature, carbon dioxide content, humidity level, fine fine particulate matter content, sound intensity, light intensity, and presence of a person in the building or in one or more rooms thereof.

15. Control system according to any one of the preceding claims, wherein the operation data comprises one or more of: setting values of a ventilation system, setting values of a sun protection system, setting values of a heating system, and setting values of a cooling system.
